Europäisches Patentamt

European Patent Office

Office européen des brevets

(19)

(11) Numéro de publication: **0 046 427 B1**

## (12) FASCICULE DE BREVET EUROPEEN

(45) Date de publication du fascicule du brevet:
**23.11.83**

(21) Numéro de dépôt: **81401262.1**

(22) Date de dépôt: **05.08.81**

(51) Int. Cl.³: **A 01 D 85/00**

(54) **Dispositif de liage pour presses à balles cylindriques.**

(30) Priorité: **20.08.80 FR 8018201**

(43) Date de publication de la demande:
**24.02.82 Bulletin 82/8**

(45) Mention de la délivrance du brevet:
**23.11.83 Bulletin 83/47**

(84) Etats contractants désignés:
**DE FR GB IT NL**

(56) Documents cités:
**neant**

(73) Titulaire: **JOHN DEERE (Société Anonyme), 8, Quai de la Madeleine, F-45000 Orléans (FR)**

(72) Inventeur: **Viaud, Jean, Chargey-les-Gray, F-70100 Gray (FR)**

(74) Mandataire: **Pruvost, Marc Henri et al, Cabinet PRUVOST 31 Bld. Gutenberg, F-93190 Livry-Gargan (FR)**

ACTORUM AG

Dispositif de liage pour presses à balles cylindriques

La présente invention concerne les presses à balles cylindriques.

Ces presses sont d'un type général bien connu et comprennent au moins un jeu de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la machine. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un dispositif comprenant un guide-ficelle déplacé transversalement au sens de marche de la presse, généralement devant l'orifice d'entreé dans cette presse de produits récoltés à partir du champ. La ficelle est prélevée à une réserve appropriée et rejoint ce guide avant de pénétrer dans la presse. Lorsque son extrémité parvient dans cet intervalle d'entrée des produits, elle est saisie par la nappe de produits et enroulée autour de la balle sous l'effet de la rotation de cette dernière entre les bandes ou courroies, ce mouvement d'enroulement se conjuguant à une répartition des spires de ficelle ainsi formées sur la longueur de la balle, du fait du mouvement de balayage transversal du guide.

Les dispositifs de guidage existants sont dans de nombreux cas relativement compliqués et en conséquence d'un prix de revient élevé.

Le but de l'invention est de créer un dispositif pour commander le déplacement transversal du guideficelle par rapport à la presse qui soit d'un agencement simple et robuste, et en même temps d'un fonctionnement fiable.

On a déjà proposé (Brevet US 4 092 818, Brevet français 2 366 786) de prévoir au voisinage de l'orifice d'entrée de la ficelle de liage dans la chambre de la presse un guide rectiligne orienté transversalement, destiné à un guide-ficelle, afin de déplacer ce dernier sur la largeur de la presse pour le liage. Mais ce guide est alors constitué par une vis entraînée en rotation par exemple par une transmission à partir d'autres organes rotatifs de la presse, ou bien il est conjugué à une vis entraînée en rotation à partir d'un moteur électrique, ou encore à une crémaillère avec laquelle engrène un pignon lui-même entraîné par un moteur électrique, ou bien à un système de chaînes ou analogues passant sur des roues de renvoi latérales dont l'une au moins est entraînée par un moteur électrique.

Dans chacun de ces cas, un mécanisme d'entraînement doit être prévu pour assurer le déplacement transversal du guide-ficelle, ce qui augmente le prix de revient et la complexité du système, et en conséquence les causes de dérangement.

L'invention a également pour but de remédier à ces inconvénients.

Elle concerne à cet effet un dispositif de liage pour presses à balles cylindriques du type comportant au moins un jeu de bandes ou courroies délimitant, à l'intérieur de la presse, une chambre d'enroulement des produits de récolte pour la formation d'une balle cylindrique, et un guide rectiligne disposé transversalement à la presse au voisinage de l'orifice d'entrée de la ficelle de liage dans cette chambre et sur lequel peut se déplacer un support portant un guide-ficelle, caractérisé en ce qu'une roue directrice pouvant être amenée en contact avec le jeu de bandes est montée sur ce support, cette roue étant orientable par rapport audit support et ainsi, à l'axe longitudinal de la presse pour provoquer, par contact avec les bandes ou courroies, un déplacement de ce support de la roue directrice et avec lui du guideficelle sur ce guide transversal, pour le liage de la balle.

Ainsi, le contact de la roue directrice orientable avec l'un des jeux de bandes provoque d'une manière extrêmement simple et fiable le déplacement requis du support et du guide-ficelle sur la largeur de la presse, sans devoir utiliser de moyen d'entraînement additionnel.

Dans le cas d'une presse comportant deux jeux de bandes ou courroies d'enroulement des produits de récolte, le guide transversal peut être disposé judicieusement au voisinage des rouleaux de guidage supérieurs de ces jeux de bandes ou courroies, la ficelle de liage passant alors entre lesdits rouleaux pour sa pénétration dans la chambre de la presse.

Chaque jeu de courroies comprend généralement au moins un rouleau de renvoi mobile qui se déplace en fonction de l'augmentation de diamètre de la balle et qui est habituellement porté par des bras pivotants. Dans un tel cas, suivant un mode de réalisation paraissant avantageux, le guide transversal est formé par une barre portée par les bras de la presse servant à supporter le rouleau mobile de l'un au moins de jeux de courroies ou bandes.

Le support de la roue directrice peut alors être monté de façon coulissante sur cette barre ou sur le guide transversal par exemple par un guidage linéaire à billes ou par des moyens analogues, afin de pouvoir se déplacer en va-et-vient transversalement à la presse.

Suivant un mode de réalisation possible, la roue directrice est montée à rotation dans une chape ou analogue, qui peut pivoter autour d'un axe en principe vertical dans un palier relié de façon coulissante à la barre transversale formant guide. Ce montage permet ainsi l'orientation de la roue directrice et en conséquence le contrôle de son déplacement transversal le long du guide par rapport à la presse, la vitesse de déplacement transversal étant fonction de l'angle formé entre le plan de cette roue directrice et la direction longitudinale de la presse.

Pour maintenir chaque fois la roue directrice dans l'une ou l'autre de deux positions possibles d'orientation définies de préférence par des butées, on prévoit judicieusement un ressort de traction monté entre un élément solidaire de la chape portant cette roue directrice et un point fixe du support, ce qui assure ainsi le maintien désiré de cette roue dans chacune des positions requises de part et d'autre d'un point mort.

Le changement de direction de la roue directrice par rapport à la direction longitudinale de la presse peut être commandé en fin de course transversale de toute manière désirée. Suivant un mode de réalisation particulièrement simple et paraissant avantageux, un bras relié à la roue directrice ou à la chape ou analogue dans lequel elle est montée sert de point d'attache à une corde ou à un organe équivalent qui est dirigé vers l'avant en traversant un guide situé sur l'axe longitudinal médian de la presse. Cette corde peut alors être actionnée par le conducteur du tracteur auquel la presse est attelée quand la roue directrice se trouve en fin de course lors de son mouvement transversal. Toutefois on comprendra que d'autres moyens tels que de simples butées peuvent être prévus pour cette commande.

Suivant une particularité constructive paraissant judicieuse, la roue directrice est conjuguée à un galet ou autre organe de pression et la ficelle servant au liage passe entre cette roue et ce galet. La roue directrice est alors équipée judicieusement d'un système formant roue libre pour permettre simplement sa rotation dans le sens correspondant à la pénétration de la ficelle dans la presse. Elle sert ainsi au maintien de la ficelle entre les opérations de liage.

Suivant une autre particularité constructive paraissant avantageuse, la roue directrice est montée de façon relevable, de manière à n'être amenée en contact avec les bandes ou courroies de formation de la balle qu'au moment du liage. A cet effet, la barre formant guide transversal peut être montée de façon pivotante, des moyens étant prévus pour son verrouillage en position relevée. La commande du relevage et de l'abaissement de la roue directrice peut alors être assurée par exemple au moyen de la corde précitée servant à inverser l'orientation de la roue directrice en fin de course lors du mouvement transversal, ou bien par des moyens fournissant une fonction équivalente.

La description qui va suivre faite en regard des dessins annexés donnés à titre non limitatif permettra de mieux comprendre l'invention.

La Fig. 1 est une vue en perspective d'une presse à balles cylindriques équipée d'un dispositif de liage suivant l'invention.

La Fig. 2 est une vue en détail à plus grande échelle de la barre formant guide et de la roue directrice associée, avec le dispositif de verrouillage de cette barre.

La Fig. 3 est une vue schématique de profil montrant la manière dont la ficelle pénètre dans la chambre de formation de la balle pour le liage de celle-ci.

La Fig. 4 est une vue schématique en plan montrant la manière dont l'inversion de la roue directrice est commandée.

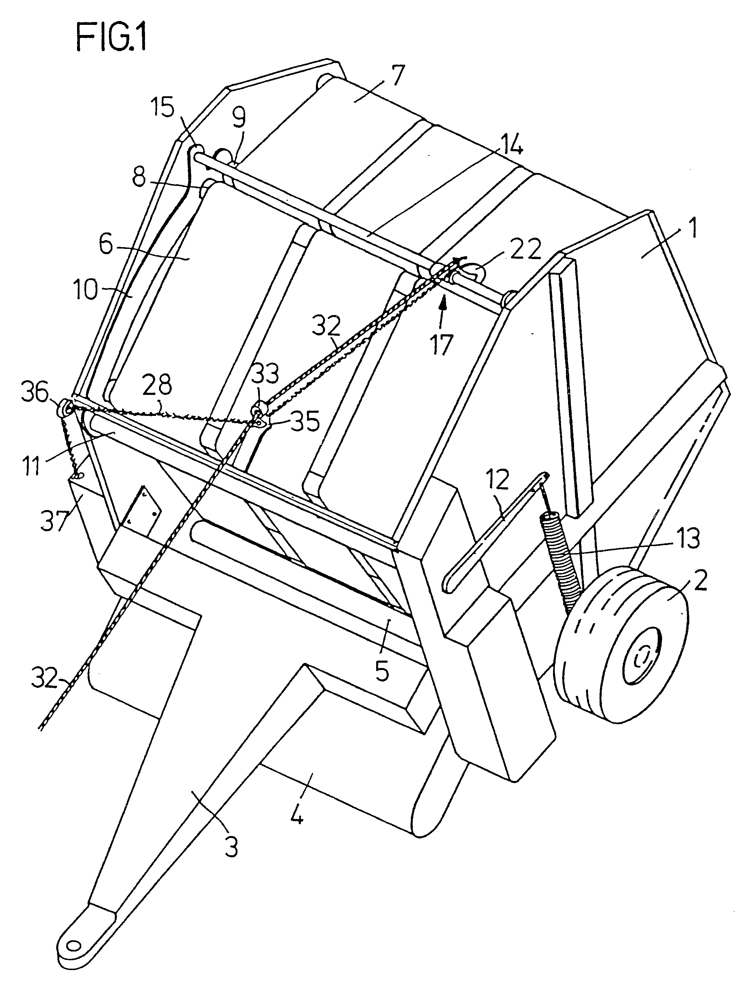

On a représenté sur la Fig. 1 une presse à balles cylindriques de type classique comportant un corps 1 supporté par un châssis équipé de roues 2, la presse étant destinée à être attelée à un tracteur au moyen d'un timon 3. Un ramasseur indiqué schématiquement en 4 est prévu de façon classique à la partie avant du corps 1 de la presse, de manière à ramasser les produits de récolte, tels que du fourrage, sur le champ et à les amener à l'orifice d'entrée des produits dans la presse, ménagé entre des rouleaux dont l'un est visible en 5 sur la Fig. 1.

Ces produits subissent à l'intérieur de la chambre de la presse un enroulement sous l'effet de bandes ou courroies 6 et 7 pour former une balle cylindrique, d'une manière en soi connue.

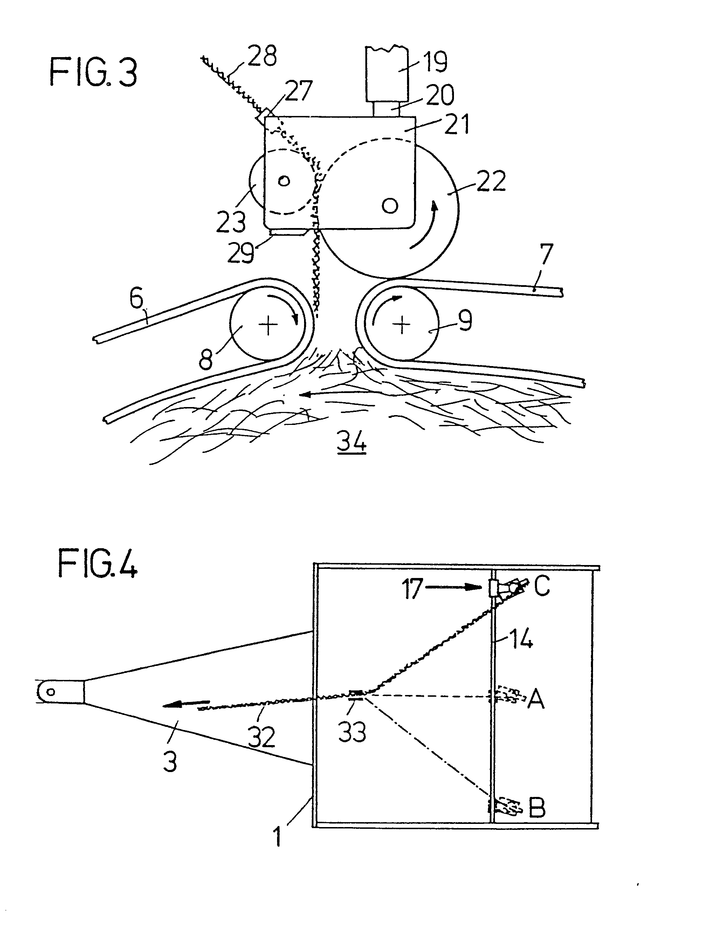

Il est prévu généralement, dans les presses de ce type, deux jeux de bandes ou courroies 6, 7 qui passent sur différents rouleaux de renvoi. Au moins un rouleau de chaque jeu de bandes 6, 7 est mobile et se déplace en fonction de l'augmentation de diamétre de la balle pendant la formation de celle-ci. Sur les Fig. 1 et 3, on a désigné par les références 8 et 9 les rouleaux mobiles supérieurs de chaque jeu de bandes 6, 7. On voit sur la Fig. 1 que ces rouleaux mobiles sont portés par des bras 10 qui sont calés sur un arbre transversal 11 monté de façon pivotante dans le corps de la machine. Cet arbre porte à au moins une extrémité un bras 12 soumis à l'action d'un ressort de rappel 13, d'une manière en soi connue. La balle qui se forme dans la chambre de la presse repousse les courroies 6, 7 du fait de l'augmentation de son diamètre et provoque le déplacement des rouleaux mobiles 8, 9 et avec eux des bras 10 en antagonisme à l'action du ressort de rappel 13.

Suivant l'invention, une barre transversale 14 s'étend entre des pattes 15 portées par les bras 10.

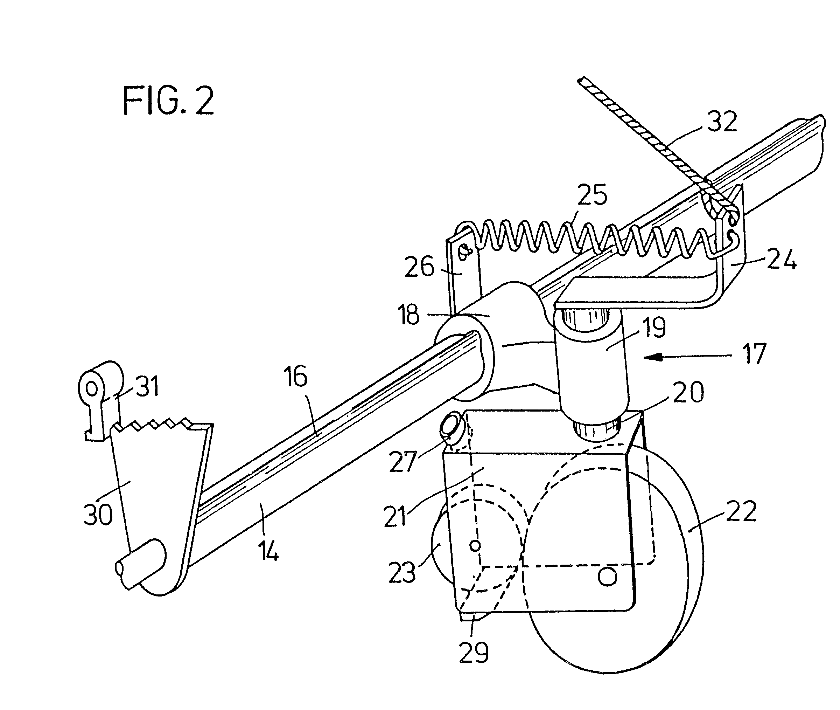

Comme cela est mieux visible sur la Fig. 2, cette barre 14 est munie sur sa longueur d'une nervure 16 et elle reçoit un support désigné d'une façon générale par la référence 17, ce support comprenant un manchon 18 adapté sur la barre 14 et pouvant se déplacer sur celle-ci par un guidage linéaire à billes par exemple. On voit sur la Fig. 2 que l'alésage intérieur du manchon 18 comporte une gorge adaptée sur la rainure 16, de sorte que ledit manchon est angulairement solidaire de la barre 14.

Un palier 19 relié rigidement au manchon 18 pour former le support 17 présente un alésage vertical dans lequel peut pivoter la queue 20 d'une chape 21 dirigée vers le bas. Cette chape sert au montage d'une roue directrice 22 et d'un galet 23. La roue directrice 22 est munie judicieusement d'un système de roue libre, de façon à pouvoir tourner simplement dans le sens indiqué par la flèche sur la Fig. 3 pour une raison qui sera énoncée plus loin. Le galet 23 est avantageusement en caoutchouc.

La queue 20 de la chape porte à son extrémité supérieure un bras 24, et un ressort de traction 25 est monté entre ce bras et une patte 26 solidaire du manchon 18. Le ressort 25 agit en conséquence pour faire pivoter le bras 24 et avec lui la chape 21 et la roue directrice 22 dans le palier vertical 19, de part et d'autre d'une position de point mort dans laquelle ce ressort serait aligné avec la branche horizontale du bras 24. Le degré de pivotement dans un sens et dans l'autre est limité par des butées réglables (non représentées), ce qui permet de régler à volonté la position angulaire de la roue directrice 22 par rapport à un plan perpendiculaire à la barre 14.

La chape 21 porte également un œillet de guidage 27 pour le passage de la ficelle 28 comme visible sur la Fig. 3, ainsi qu'un couteau 29 dont la fonction sera indiquée plus loin.

La barre 14 porte vers une extrémité un secteur denté 30 calé angulairement sur elle et pouvant coopérer avec un cliquet 31 qui est libre en rotation.

Une corde 32, dont le rôle sera également indiqué plus loin, est accrochée au bras 24 relié à une chape 21. Cette corde passe à travers un guide 33 situé sur l'axe longitudinal de la presse comme visible sur les Fig. 1 et 4 et elle rejoint un point aisément accessible pour le conducteur du tracteur auquel la presse est attelée.

On décrira maintenant le mode de fonctionnement du dispositif de liage suivant l'invention.

Au début de l'opération, le support 17 portant la roue directrice 22 se trouve au milieu de la barre formant le guide transversal 14, la chape 21 étant orientée dans un sens avec la roue directrice. Par ailleurs, la barre 14 est verrouillée, par le secteur denté 30 et le cliquet 31, dans une position angulaire telle que la roue directrice 22 soit relevée à l'écart des bandes ou courroies 6, 7. Dans cette condition, la ficelle 28 est retenue par la roue directrice 22 et le galet 23 du fait que cette roue directrice est équipée d'un système de roue libre qui s'oppose à sa rotation dans un sens et qui évite ainsi l'échappement de la ficelle.

Au fur et à mesure de l'augmentation de diamètre de la balle, les bras 10 se déplacent vers le haut avec les rouleaux 8 et 9.

Lorsque la balle (visible en 34 sur la Fig. 3) a atteint son diamètre maximum, la barre 14 peut être déverrouillée automatiquement par l'actionnement d'une butée, ou bien ce déverrouillage peut être assuré par le conducteur du tracteur, qui tire alors sur la corde 32. Le secteur denté 30 échappe ainsi au cliquet 31 et, sous l'effet du poids du support et des éléments associés, la roue directrice 22 vient s'appliquer contre les bandes 7 comme visible sur la Fig. 3. Du fait du mouvement de ces bandes, cette roue directrice est alors entraînée en rotation dans le sens indiqué par la flèche sur la Fig. 3. Par coopération avec le galet 23, elle provoque l'appel de la ficelle 28 qui, comme visible sur la Fig. 1, passe dans des guides fixes 35 et 36 et qui est prélevée à une boîte à ficelle 37 du type usuel.

On voit également sur la Fig. 3 qu'au début de l'opération la ficelle pend entre la roue directrice 22 et le galet 23, de sorte que sous l'effet de la rotation de cette roue 22 l'extrémité de cette ficelle va venir en contact avec la balle 24, par laquelle elle va être entraînée tout autour de cette balle pour le liage.

Etant donné que la roue directrice 22 et la chape 21 sont inclinées par rapport à un plan perpendiculaire à la barre 14 et ainsi par rapport à un plan longitudinal de la presse, il va résulter du contact de la roue 22 avec les bandes 7 un déplacement transversal de cette roue et ainsi du support 17 sur la longueur de la barre 14. Du fait de ce déplacement transversal, le brin de ficelle qui passe entre les rouleaux 8 et 9 (Fig. 3) pour s'enrouler autour de la balle va former des spires hélicoïdales autour de celle-ci.

On a indiqué en A sur la Fig. 4 la position de départ du support 17 et de la roue directrice 22 et en B la position qu'ils atteignent sur un côté de la presse.

Quand cette position latérale est effectuée, une butée (non représentée) peut inverser la position d'inclinaison de la chape 21 et ainsi de la roue 22, ou bien cette inversion peut être commandée par le conducteur du tracteur, qui tire alors sur la corde 32. Du fait de cette inversion, la roue directrice va se déplacer transversalement dans le sens opposé par rapport à la presse, en entraînant le support 17 et la ficelle 28 jusqu'à atteindre la position opposée indiquée en C sur la Fig. 4. Dans cette position, une autre butée ou une nouvelle traction sur la corde 32 permet d'inverser à nouveau la position angulaire de la roue directrice, qui revient aussi vers le milieu de la presse.

La commande de l'inversion par le conducteur du tracteur au moyen de la corde 32 présente l'avantage de permettre à ce conducteur de choisir le nombre de spires formées par la ficelle à l'extrémité de la balle. Entre ces deux positions, étant donné que le mouvement est commandé par la position d'inclinaison de la roue directrice, des spires de ficelle régulièrement espacées vont se former tout autour de la balle.

Quand le support 17 parvient au milieu de la presse, le conducteur peut, par une traction suffisante exercée sur la corde 32, relever la roue directrice 22 à l'écart des bandes 7. A ce moment, le couteau 29 vient, sous l'effet du mouvement de basculement du support et de la chape, s'appliquer contre la ficelle 28 pour la sectionner. L'extrémité de la ficelle est alors retenue comme précédemment entre la roue directrice 22 et le galet 23.

Lors de ce basculement, la barre 14 pivote autour de son axe et le secteur denté 30 vient coopérer à nouveau avec le cliquet 31, ce qui verrouille la roue directrice en position relevée.

## Revendications

1. Dispositif de liage pour presses à balles cylindriques du type comportant au moins un jeu de bandes ou courroies (6, 7) délimitant, à l'intérieur de la presse, une chambre d'enroulement des produits de récolte pour la formation d'une balle cylindrique, et un guide rectiligne (14) disposé transversalement à la presse au voisinage de l'orifice d'entrée de la ficelle de liage dans cette chambre et sur lequel peut se déplacer un support (17) portant un guide-ficelle (27), caractérisé en ce qu'une roue directrice (22) pouvant être amenée en contact avec le jeu de bandes (6, 7) est montée sur ce support (17), cette roue étant orientable par rapport audit support et ainsi à l'axe longitudinal de la presse pour provoquer, par contact avec les bandes ou courroies (6, 7), un déplacement de ce support (17) de la roue directrice (22) et avec lui du guideficelle (27) sur ce guide transversal (14), pour le liage de la balle (34).

2. Dispositif de liage pour presses à balles cylindriques du type comportant deux jeux (6, 7) de bandes ou courroies d'enroulement des produits de récolte, caractérisé en ce que le guide transversal (14) est disposé au voisinage des rouleaux de guidage supérieurs de ces jeux (6, 7) de bandes ou courroies, la ficelle de liage (28) passant entre lesdits rouleaux pour sa pénétration dans la chambre de la presse.

3. Dispositif suivant la revendication 2, caractérisé en ce que, dans le cas où chaque jeu de bandes (6, 7) comprend au moins un rouleau de renvoi mobile (8, 9) se déplaçant en fonction de l'augmentation de diamètre de la balle et porté par des bras pivotants (10), le guide transversal est formé par une barre (14) portée par les bras (10) de la presse servant à supporter le rouleau mobile (8, 9) de l'un au moins des jeux de bandes (6, 7).

4. Dispositif suivant la revendication 1, 2 ou 3, caractérisé en ce que le support (17) de la roue directrice (22) est monté de façon coulissante sur le guide transversal (14) ou sur la barre, notamment par un guide linéaire à billes ou par des moyens analogues, afin de pouvoir se déplacer en va-et-vient transversalement à la presse.

5. Dispositif suivant l'une quelconque des revendications précédentes, caractérisé en ce que la roue directrice (22) est montée à rotation dans une chape (21) ou analogue, qui peut pivoter autour d'un axe (20) en principe vertical dans un palier (19) relié de façon coulissante à la barre transversale (14) formant guide, pour assurer l'orientation de cette roue directrice par rapport à l'axe longitudinal de la presse.

6. Dispositif suivant la revendication 5, caractérisé en ce que des moyens tels que des butées sont prévus pour limiter et définir la position angulaire de la roue directrice (22) par rapport à l'axe longitudinal de la presse.

7. Dispositif suivant la revendication 5 ou 6, caractérisé en ce qu'un ressort de traction (25) est monté entre un élément solidaire (24) de la chape (21) portant la roue directrice (22) et un point fixe (26) du support (17), pour maintenir la roue directrice dans chacune des positions d'orientation requises de part et d'autre d'un point mort.

8. Dispositif suivant l'une quelconque des revendications précédentes, caractérisé en ce que des moyens (32) sont prévus pour inverser l'orientation de la roue directrice par rapport à l'axe longitudinal de la presse quand cette roue directrice parvient en fin de course sur un côté de cette presse.

9. Dispositif suivant la revendication 8, caractérisé en ce que la chape (21) portant la roue directrice (22) ou un élément de cette chape sert de point d'attache à une corde (32) pouvant être actionnée par le conducteur du tracteur, pour inverser l'orientation de la roue directrice (22).

10. Dispositif suivant l'une quelconque des revendications précédentes, caractérisé en ce que la roue directrice (22) est conjuguée à un galet (23) ou autre organe de pression, la ficelle (28) servant au liage passant entre cette roue et ce galet, et en ce que la roue directrice (22) est équipée d'un système de roue libre permettant simplement sa rotation dans le sens correspondant à la pénétration de la ficelle (28) dans la presse.

11. Dispositif suivant l'une quelconque des revendications précédentes, caractérisé en ce que la roue directrice (22) est montée de façon relevable, de manière à être maintenue normalement à l'écart des bandes ou couroies (6, 7) pendant la formation de la balle (34).

12. Dispositif suivant la revendication 11, caractérisé en ce que la barre (14) formant guide transversal présente une section non circulaire et est montée de façon à pouvoir osciller autour de son axe, des moyens (30, 31) étant prévus pour le verrouillage de cette barre dans une position correspondant à la position relevée de la roue directrice (22).

13. Dispositif suivant la revendication 11 ou 12. caractérisé en ce qu'un couteau (29) est monté sur le support (17) de la roue directrice (22), dans une position telle qu'il vienne en contact avec la ficelle de liage (28) pour provoquer son sectionnement lors du relevage de cette roue directrice.

## Patentansprüche

1. Bindevorrichtung für Pressen zylindrischer Ballen des Typs, der wenigstens einen Satz Bänder oder Riemen (6, 7) umfasst, welche zum Inneren der Presse eine Wickelkammer für die Ernteprodukte zur Bildung eines zylindrischen Ballens begrenzen und eine gerade Führung (14), die quer zur Presse nahe der Eintrittsöffnung nahe des Bindegarns in die Kammer angeordnet ist und auf welcher sich eine Trageinrichtung (17) verstellen kann, welche eine Garnführung (27) trägt, dadurch gekennzeichnet, dass ein Ausrichterad (22), das in Kontakt mit dem Satz Bänder (6, 7) gebracht werden kann, auf der Trageinrichtung (17) montiert ist, dass dieses Rad in Bezug auf die Trageinrichtung orientierbar ist und auch gegenüber der Längsachse der Presse, um durch Kontakt mit den Bändern oder Riemen (6, 7) eine Verstellung der Trageinrichtung (17) des Ausrichterades (22) und mit diesem der Garnführung (27) auf der Querführung (14) für das Binden des Ballen (34) hervorzurufen.

2. Bindevorrichtung für Pressen eines zylindrischen Ballens des Typs, der zwei Sätze (6, 7) Bänder oder Riemen umfasst, um die Ernteprodukte aufzurollen, dadurch gekennzeichnet, dass die Querführung (14) nahe der oberen Führungsrollen des Satzes (6, 7) der Bänder oder Riemen angeordnet ist und das Bindegarn (28) zwischen diesen Rollen zum Eindringen in die Kammer der Presse hindurchgeführt ist.

3. Vorrichtung nach Anspruch 2, dadurch gekennzeichnet, dass in dem Fall, bei dem jeder Satz Bänder (6, 7) mindestens ein bewegliches Getrieberad (8, 9) aufweist, welches sich in Abhängigkeit von der Vergrösserung des Durchmessers des Ballens verstellt und durch Schwenkarme (10) getragen ist, die Querführung durch eine Stange (14) gebildet ist, die durch die Arme (10) der Presse getragen wird, welche zur Unterstützung der beweglichen Räder (8, 9) wenigstens des einen der Bandsätze (6, 7) dienen.

4. Vorrichtung nach Anspruch 1, 2 oder 3, dadurch gekennzeichnet, dass die Trageinrichtung (17) für das Ausrichterad (22) gleitend auf der Querführung (14) oder auf der Stange montiert ist, insb. durch eine lineare Kugelführung oder durch analoge Mittel, damit sie sich in Querrichtung der Presse hin und her verschieben kann.

5. Vorrichtung nach irgend einem der voranstehenden Ansprüche dadurch gekennzeichnet, dass das Ausrichterad (22) drehbar in einer Gabel (21) oder einem analogen Teil montiert ist, die um eine Achse (20) prinzipiell vertikal in einem Lager (19) schwenken kann, welches verschiebbar mit der Querstange (14), welche die Führung bildet, verbunden ist, um die Orientierung des Ausrichterades in Bezug auf die Längsachse der Presse sicherzustellen.

6. Vorrichtung nach Anspruch 5, dadurch gekennzeichnet, dass Mittel, wie Anschläge, vorgesehen sind, um die Winkelposition des Ausrichterades (22) in Bezug auf die Längsachse der Presse zu begrenzen und zu bestimmen.

7. Vorrichtung nach Anspruch 5 oder 6, dadurch gekennzeichnet, dass eine Zugfeder (25) zwischen einem Formteil (24) der das Ausrichterad (22) tragenden Gabel (21) und einem festen Punkt (26) der Trageinrichtung (17) montiert ist, um das Ausrichterad in jeder beiderseits eines Totpunktes erforderlichen Orientierungsstellung zu halten.

8. Vorrichtung nach irgend einem der voranstehenden Ansprüche, dadurch gekennzeichnet, dass Mittel (32) vorgesehen sind, um die Orientierung des Ausrichterades in Bezug auf die Längsachse der Presse umzukehren, wenn das Ausrichterad an das Ende seiner Bahn auf einer Seite dieser Presse gelangt.

9. Vorrichtung nach Anspruch 8, dadurch gekennzeichnet, dass der Gabelteil (21), der das Ausrichterad (22) trägt oder ein Element dieser Gabel, als Befestigungspunkt für eine Schnur (32) dient, welche durch den Fahrer des Ackerschleppers bedient werden kann, um die Orientierung des Ausrichterades (22) umzukehren.

10. Vorrichtung nach irgend einem der voranstehenden Ansprüche, dadurch gekennzeichnet, dass das Ausrichterad (22) mit einer Rolle (23) oder einem anderen Druckorgan kombiniert ist, die zum Binden dienende Schnur (28) zwischen dem Rad und der Rolle hindurchläuft und dass das Ausrichterad (22) mit einem System eines freien Rades ausgerüstet ist, welches auf einfache Weise seine Drehung in dem Sinne gestattet, welche dem Eindringen der Schnur (28) in die Presse entspricht.

11. Vorrichtung nach irgend einem der voranstehenden Ansprüche, dadurch gekennzeichnet, dass das Ausrichterad (22) abhebbar montiert ist, derart, dass es normalerweise im Abstand von den Bändern oder Riemen (6, 7) während der Bildung des Ballens (34) gehalten wird.

12. Vorrichtung nach Anspruch 11, dadurch gekennzeichnet, dass die Stange (14), welche die Querführung bildet, einen nicht kreisförmigen Querschnitt darbietet und in der Weise montiert ist, dass sie um ihre Achse oszillieren kann, dass Mittel (30, 31) vorgesehen sind, um diese Stange in einer Stellung zu verriegeln, welche der angehobenen Stellung des Ausrichterades (22) entspricht.

13. Vorrichtung nach Anspruch 11 oder 12, dadurch gekennzeichnet, dass ein Messer (29) auf der Trageinrichtung (17) des Ausrichterades (22) in einer Stellung montiert ist, derart, dass es mit der Bindeschnur (28) in Kontakt gelangt, um ein Durchtrennen hervorzurufen, wenn dieses Ausrichterad angehoben wird.

**Claims**

1. Binding apparatus for cylindrical-bale-forming presses of the type comprising at least one set of bands or belts (6, 7) which delimit within the press a chamber for the rolling up of harvest products so as to form a cylindrical bale, and a rectilinear guide (14) disposed transversely of the press in the vicinity of the opening for the entry of the binder twine into the said chamber and on which a support (17) carrying a twine guide (17) is displaceable, characterised in that a direction-controlling wheel (22) which can be brought into contact with the set of bands (6, 7) is mounted on the said support (17), the said wheel being capable of orientation with respect to the said support and hence to the longitudinal axis of the press so as to produce, by contact with bands or belts (6, 7), a displacement of the said support (17) of the direction-controlling wheel (22) and therewith of the twine guide (27) on the said transverse guide (14) for the binding of the bale (34).

2. Binding apparatus for cylindrical-bale-forming presses of the type comprising two sets (6, 7) of bands or belts for the rolling up of harvest products, characterised in that the transverse guide (14) is located in the vicinity of upper guide rollers of the said sets (6, 7) of bands or belts, the binder twine (28) passing between the said rollers for its entry into the chamber of the press.

3. Apparatus according to claim 2, characterised in that, in the case in which each set of bands (6, 7) is provided with at least one movable return roller (8, 9) which is displaced in accordance with the increase in the diameter of the bale and is carried by pivoted arms (10), the transverse guide is formed by a bar (14) carried by the arms (10) of the press and which serves for the support of the moveable roller (8, 9) of at least one of the sets of bands (6, 7).

4. Apparatus according to claim 1, 2 or 3, characterised in that the support (17) of the direction-controlling wheel (22) is mounted for sliding movement on the transverse guide (14) or on the bar, in particular by means of a linear ball bearing guide or by analogous means, so as to be displaceable to and fro transversely of the press.

5. Apparatus according to any one of the preceding claims, characterised in that the direction-controlling wheel (22) is rotatably mounted in a pulley block (21) or the like which is pivotable around a substantially vertical axis (20) in a bearing (19) slidably connected to the transverse guide-forming bar (14) in order to bring about the orientation of the said direction-controlling wheel with respect to the longitudinal axis of the press.

6. Apparatus according to claim 5, characterised in that means such as stops are provided for limiting and defining the angular position of the direction-controlling wheel (22) with respect to the longitudinal axis of the press.

7. Apparatus according to claim 5 or 6, characterised in that a draw-spring (25) is connected between a part which is rigid with the pulley-block (21) carrying the direction-controlling wheel (22) and a fixed point (26) on the support (17), so as to keep the direction-controlling wheel in each of the required positions of orientation on one side or the other of a dead point.

8. Apparatus according to any one of the preceding claims, characterised in that means (32) are provided for reversing the orientation of the direction-controlling wheel with respect to the longitudinal axis of the press when the said direction-controlling wheel reaches the end of its path of travel at one side of the press.

9. Apparatus according to claim 8, characterised in that the pulley block (21) which carries the direction-controlling wheel (22) or a component part of the said pulley block serves as a point of attached of a cord (32) which can be operated by the driver of the tractor in order to reverse the orientation of the direction-controlling wheel (22).

10. Apparatus according to any one of the preceding claims, characterised in that the direction-controlling wheel (22) is associated with a pulley (23) or other pressure member, the binder twine (28) passing between the said wheel and the said pulley, and in that the said direction-controlling wheel (22) is provided with a freewheel mechanism which allows it to rotate only in the direction corresponding to the entry of the twine (28) into the press.

11. Apparatus according to any one of the preceding claims, characterised in that the direction-controlling wheel (22) is mounted so that it can be raised, in such a manner that it is normally kept apart from the bands or belts (6, 7) during the formation of the bale (34).

12. Apparatus according to claim 11, characterised in that transverse guide-forming bar (14) has a non-circular cross-section and is mounted so as to be capable of oscillating about its axis, means (30, 31) being provided for locking the said bar in a position corresponding to the raised position of the direction-controlling wheel (22).

13. Apparatus according to claim 11 or 12, characterised in that a cutter blade (29) is mounted on the support (17) of the direction-controlling wheel (22) in a position such that it comes into contact with the binder twine (28) in order to effect the severance thereof when the said direction-controlling wheel is raised.

# FIG.1

FIG. 2

FIG.3

FIG.4